# EUROPÄISCHE PATENTSCHRIFT

(11) **EP 2 475 563 B1**
(45) Veröffentlichungstag und Bekanntmachung des Hinweises auf die Patenterteilung: **16.04.2014**
(21) Anmeldenummer: 10749881.8
(22) Anmeldetag: 09.09.2010
(51) Int. Cl.: B61K 9/04

(54) **VERFAHREN UND VORRICHTUNG ZUM ABSCHÄTZEN DER TEMPERATUR EINES RADSATZLAGERS EINES RADSATZES EINES SCHIENENFAHRZEUGS**
METHOD AND DEVICE FOR ESTIMATING THE TEMPERATURE OF AN AXLE BEARING OF A WHEELSET OF A RAIL VEHICLE
PROCÉDÉ ET DISPOSITIF PERMETTANT D'ÉVALUER LA TEMPÉRATURE D'UNE BOÎTE D'ESSIEU D'UN ESSIEU DE VÉHICULE FERROVIAIRE

(30) Priorität: 09.09.2009 DE 102009040801
(43) Veröffentlichungstag der Anmeldung: 18.07.2012
(73) Patentinhaber: KNORR-BREMSE Systeme für Schienenfahrzeuge GmbH, 80809 München (DE)
(72) Erfinder: FURTWÄNGLER, Ralf, 80689 München (DE); FRIESEN, Ulf, 85579 Neubiberg (DE)
(74) Vertreter: Mattusch, Gundula
(86) Internationale Anmeldenummer: PCT/EP2010/063206
(87) Internationale Veröffentlichungsnummer: WO 2011/029859

(56) Entgegenhaltungen:
- EP-A2- 0 276 201
- EP-A2- 1 197 416
- WO-A1-97/11871
- US-A- 4 316 175
- US-A1- 2003 187 605

## Beschreibung

Die Erfindung betrifft ein Verfahren und eine Vorrichtung zum Verfahren zum Abschätzen der Temperatur eines Radsatzlagers eines Radsatzes eines Schienenfahrzeugs mittels eines Rechenmodells gemäß den Oberbegriffen von Anspruch 1 und Anspruch 8.

Im Schienenfahrzeugverkehr werden heutzutage vermehrt Diagnose- und Überwachungssysteme eingesetzt, mit denen Zustandsänderungen von Bauteilen und Baugruppen des Schienenfahrzeugs erfasst werden, um Defekte dieser Bauteile und Baugruppen zu erkennen. Insbesondere bei einem Radsatz eines Schienenfahrzeuges ist eine Detektion von Schäden im Hinblick auf ein Heißlaufen von hohem Interesse.

Moderne Hochgeschwindigkeitszüge fahren grenzüberschreitend und müssen daher entsprechende Kriterien zur Sicherstellung der Interoperabilität einhalten, beispielsweise die Richtlinie 96/48/EG. Dort wird unter anderem eine Onboard-Überwachung der Radsatzlager der Radsätze des Schienenfahrzeugs gefordert. Um kritische Betriebszustände wie beispielsweise das Heißlaufen eines Radsatzlagers zu offenbaren ist insbesondere eine Temperaturüberwachung der Radsatzlager notwendig.

Aus der EP 1 365 163 A1 ist eine Vorrichtung zum Überwachen der Temperatur eines Radsatzlagers eines Radsatzes eines Schienenfahrzeugs bekannt, bei welchem ein Sensorelement direkt an einem Dichtungselement des Radsatzlagers angeordnet ist, d.h. möglichst nahe an der Lastzone des Radsatzlagers. Das Anbringen eines Temperatursensors direkt an der Lastzone eines Radsatzlagers, an welcher erfahrungsgemäß die höchsten Temperaturen auftreten, d.h. in Umfangsrichtung des äußeren Lagerrings gesehen oben, verursacht jedoch einen gewissen Aufwand im Hinblick auf mechanische Anbindung des Temperatursensors und dessen Verkabelung und ist aus Platzgründen konstruktiv oft schwierig zu realisieren, insbesondere, wenn innerhalb einer Lagereinheit, beispielsweise bei Doppellagern mehrere Lastzonen zu berücksichtigen sind.

### Aufgabe

Demgegenüber besteht die Aufgabe der Erfindung darin, ein Verfahren bzw. eine Vorrichtung zum Abschätzen der Temperatur eines Radsatzlagers eines Radsatzes eines Schienenfahrzeugs mittels eines Rechenmodells zur Verfügung zu stellen, welches mit geringem signalverarbeitungstechnischem Aufwand und ohne direktes Anbringen von Temperatursensoren an dem betreffenden Radsatzlager eine hinreichend genaue Abschätzung der Temperatur des Radsatzlagers ermöglicht.

Diese Aufgabe wird durch die Merkmale von Anspruch 1 bzw. von Anspruch 8 gelöst.

### Offenbarung der Erfindung

Das erfindungsgemäße Verfahren sieht vor, dass
- das Rechenmodell ausgebildet ist, um abhängig von der Geschwindigkeit und der Umgebungstemperatur des Schienenfahrzeugs als Eingangsgrößen des Rechenmodells die Temperatur des betreffenden Radsatzlagers oder an einer charakteristischen Stelle des des betreffenden Radsatzlagers abzuschätzen, und zusätzlich
- die Temperatur eines vom Radsatzlager verschiedenen, aber mit dem Radsatzlager in direkter oder indirekter Weise in wärmeleitender Verbindung stehenden Bauteils des Radsatzes mittels wenigstens eines Temperatursensors im Betrieb als Messtemperatur gemessen wird,
- die Temperatur des vom Radsatzlager verschiedenen Bauteils mit Hilfe des Rechenmodells als Schätztemperatur abgeschätzt wird,
- zur Verbesserung der Genauigkeit des Rechenmodells im Hinblick auf die Abschätzung der Temperatur des Radsatzlagers das Rechenmodell ein Korrekturglied aufweist, mit welchem es anhand eines Vergleichs der Messtemperatur mit der Schätztemperatur ständig, zeitweise oder zyklisch kalibriert bzw. abgeglichen wird.

Mit anderen Worten erfolgt eine Eigenkalibrierung oder ein Eigenabgleich des Rechenmodells durch Messung und Abschätzung der Temperatur an einem von dem betreffenden Radsatzlager verschiedenen Ort, an welchem die Umstände für ein Anbringen eines Temperatursensors und dessen Verkabelung günstiger sind als an dem betreffenden Radsatzlager selbst.

Zusätzlich zur Geschwindigkeit und der Umgebungstemperatur des Schienenfahrzeugs können noch weitere Eingangsgrößen für das Rechenmodell herangezogen werden. Das Rechenmodell muss dann aus der Temperatur an der Messstelle, d.h. an dem von dem Radsatzlager verschiedenen Bauteil oder an der von dem Radsatzlager verschiedenen Baugruppe auf die Lagertemperatur rück schließen können. Das Rechenmodell basiert auf dem Gedanken, dass der Wärmeeintrag am Radsatzlager durch Wärmeleitung auf die Messstelle durch Wärmeleitung und Wärmeübergang übertragen und darüber hinaus durch äußere Faktoren beeinflusst wird, wie beispielsweise die Kühlung der Bauteile des Radsatzes durch den Fahrtwind aufgrund der Geschwindigkeit des Schienenfahrzeugs oder deren Erwärmung durch eine hohe Umgebungstemperatur. Würde aufgrund des Messortes ohne des hier vorgestellten Verfahrens einfach nur die Diagnoseschwelle niedriger gewählt werden, wäre mit Fehlauslösungen bei entsprechenden Störungen zu rechnen.

Eingangsgrößen des Rechenmodells sind neben der Temperatur an der Messstelle die Geschwindigkeit und Außentemperatur. Als Ergebnis liefert das Verfahren eine geschätzte Radsatzlagerinnentemperatur bzw. die Temperatur des Radsatzlagers an einer charakteristischen Stelle wie der Lastzone. Das Rechenmodell berücksichtigt thermische Randbedingungen wie beispielsweise:
- Wärmeeintrag durch Lagerreibung
- Wärmeleitung innerhalb des Radsatzes
- freie Konvektion
- erzwungene Konvektion

Das Korrekturglied K oder dessen Korrekturterm wird anhand eines Vergleichs der gemessenen und mit der geschätzten Temperatur an der Messstelle laufend oder zyklisch angepasst. Durch den Einfluss des Korrekturglieds erhöht sich die Genauigkeit des Rechenmodells mit der Betriebsdauer an. Anfangsfehler bei der ursprünglichen Modellbildung, Ungenauigkeiten und Abweichungen von dem realen Verhalten, wie sie durch typische Störeinflüsse in einem Schienenfahrzeug auftreten, werden durch das Korrekturglied weitestgehend kompensiert.

Die Temperaturabschätzung kann dann zur Erkennung heiß gelaufener Lager (Heißläufererkennung) heran gezogen werden, indem der abgeschätzte Temperaturwert mit einem Temperaturgrenzwert verglichen und bei Überschreiten des Temperaturgrenzwerts durch den abgeschätzten Temperaturwert ein Signal für ein heiß gelaufenes Radsatzlager und bei einem Unterschreiten des Temperaturgrenzwerts durch den abgeschätzten Temperaturwert ein Signal für einen thermisch ungestörten Betrieb des betreffenden Radsatzlagers erzeugt wird.

Zusätzlich oder alternativ wird die durch das erfindungsgemäße Verfahren abgeschätzte Temperatur des Radsatzlagers des Radsatzes des Schienenfahrzeugs zum Vergleich mit einem Temperaturgrenzwert herangezogen, um beurteilen zu können, ob eine dem Radsatzlager zugeordnete oder benachbarte Bremseinrichtung, insbesondere Reibungsbremse sich in einem gelösten oder zugespannten Zustand befindet.

Im Einzelnen liefert dann eine den Temperaturgrenzwert überschreitende abgeschätzte Temperatur des Radsatzlagers ein Signal für einen zugespannten Zustand der dem Radsatzlager zugeordneten oder benachbarten Reibungsbremse und eine den Temperaturgrenzwert unterschreitende abgeschätzte Temperatur des Radsatzlagers ein Signal für einen gelösten Zustand der dem Radsatzlager zugeordneten oder benachbarten Reibungsbremse.

Dem liegt die Erfahrung zugrunde, dass beim Zuspannen einer Reibungsbremse wie etwa bei einer der Achse des Radsatzlagers zugeordneten Scheibenbremse Reibungswärme entsteht. Diese Reibungswärme wird dann durch Wärmeübergang, Wärmeleitung entlang der Achse und/oder Konvektion auf das benachbarte Radsatzlager übertragen.

Eine relativ niedrige Radsatzlagertemperatur deutet dann nicht nur auf einen normalen Lauf des Radsatzlagers hin, sondern auch auf einen gelösten Zustand der benachbarten Reibungsbremse. Demgegenüber liefert eine relativ hohe Radsatzlagertemperatur einen Hinweis auf ein heiß gelaufenes Radsatzlager und/oder auf einen zugespannten Zustand der in Bezug zu dem betreffenden Radsatzlager benachbarten Reibungsbremse.

Mit der anhand des erfindungsgemäßen Verfahrens abgeschätzten Radsatzlagertemperatur können daher nicht nur Radsatzlager von Achsen von Schienenfahrzeugen hinsichtlich ihres thermischen Zustands sondern auch die Funktionen (zugespannt oder gelöst) von in Bezug zu dem Radsatzlager benachbarten Reibungsbremsen des Schienenfahrzeugs überwacht werden.

Durch die in den Unteransprüchen aufgeführten Maßnahmen sind vorteilhafte Weiterbildungen und Verbesserungen der Erfindung möglich.

Besonders bevorzugt wird das oben beschriebene Verfahren weiter dadurch weiter gebildet, dass es um Abschätzen der Temperaturen mehrerer Radsatzlager von Radsätzen eines Schienenfahrzeugs geeignet ist und folgende Schritte beinhaltet:
- wenigstens einigen der Radsatzlager ist jeweils ein Rechenmodell zugeordnet, um abhängig von der Geschwindigkeit des Schienenfahrzeugs als Eingangsgröße des jeweiligen Rechenmodells jeweils einen Wert für die Umgebungstemperatur des Schienenfahrzeugs abzuschätzen, wobei
- zur Verbesserung der Genauigkeit der wenigstens einigen der Radsatzlager zugeordneten Rechenmodelle im Hinblick auf die jeweilige Abschätzung des Werts für die Umgebungstemperatur des Schienenfahrzeugs für jedes der Rechenmodelle ein Korrekturglied vorgesehen ist, mit welchem das betreffende Rechenmodell anhand eines Vergleichs der jeweiligen Schätztemperatur mit der jeweiligen Messtemperatur des jeweiligen, jeweils vom betreffenden Radsatzlager verschiedenen Bauteils ständig, zeitweise oder zyklisch kalibriert wird, und
- dass aus den anhand der wenigstens einigen der Radsatzlager zugeordneten Rechenmodellen geschätzten Werten für die Umgebungstemperatur eine resultierende Umgebungstemperatur gebildet wird, welche jeweils als Eingangsgröße für die Rechenmodelle herangezogen wird, welche zum Abschätzen des Werts der jeweiligen Temperatur des jeweiligen Radsatzlagers vorgesehen sind.

Das Rechenmodell für die Schätzung der Umgebungstemperatur ist insbesondere dann anwendbar, wenn mehrere Radsatzlager überwacht werden müssen. Bei Schienenfahrzeugen mit Lagerüberwachung müssen nämlich sämtliche Radsatzlager überwacht werden. Dann sind auch mehrere Messstellen an den von den Radsatzlagern verschiedenen Bauteilen vorhanden, beispielsweise acht je Wagen und vier je Drehgestell, welches zwei Radsätze, bestehend aus jeweils zwei Rädern und einer Achse umfasst. Bei mehreren solchen Messstellen vorteilhaft ist, dass die Umgebungstemperaturabschätzung von einem einzelnen oder wenigen Heißläufern an den Radsatzlagern unbeeinflusst bleibt. Ebenso ist die Empfindlichkeit gegenüber Störungen wie z.B. Sonneneinstrahlung geringer.

Weil die Umgebungstemperatur dann nicht mehr als Eingangsgröße des Rechenmodells zur Abschätzung der Radlagertemperatur mittels eines eigenen Temperatursensors gemessen sondern ebenfalls durch ein Rechenmodell abgeschätzt wird, kann auf einen solchen Temperatursensor verzichtet werden. Das Rechenmodell ist dann ausgebildet, dass es eine Umgebungstemperatur abschätzen kann, welche vorhanden ist, damit sich die weiterhin gemessene Temperatur an dem jeweiligen, jeweils vom betreffenden Radsatzlager verschiedenen Bauteil bei einem intakten Radsatzlager einstellt.

Falls jedoch ein Radsatzlager defekt und beispielsweise heiß gelaufen ist, würde die dann in das Rechenmodell eingehende höhere Temperatur des Radsatzlagers das Abschätzergebnis für die Umgebungstemperatur verfälschen. Um eine solche Verfälschung zu verhindern, wird aus den anhand der wenigstens einigen der Radsatzlager zugeordneten Rechenmodellen geschätzten Werten für die Umgebungstemperatur eine resultierende Umgebungstemperatur gebildet, so dass Verfälschungen durch unter Umständen heiß gelaufene Radsatzlager vermindert werden oder gar nicht auftreten.

Damit ein Heißläufer an einem der Radsatzlager nicht zu einer Abschätzung einer hohen Umgebungstemperatur durch das Rechenmodell führt, sondern zu einer entsprechend hohen Radsatzlagertemperatur führt, wird aus den einzelnen Schätzungen der Umgebungstemperatur ein resultierender Wert gebildet.

Dies kann beispielsweise dadurch realisiert werden, dass nur die n niedrigsten geschätzten Umgebungstemperaturen herangezogen werden, beispielsweise als Mittelwert der n niedrigsten abgeschätzten Umgebungstemperaturen. Der resultierende Wert der Umgebungstemperatur wird dann als einheitliche Eingangsgröße für die Rechenmodelle für die Abschätzung der Temperaturen der einzelnen Radsatzlager herangezogen.

Das Verfahren ist dann entsprechend genau und wenig anfällig gegenüber Störeinflüssen. Dies ist wichtig, da neben der Sicherheit des Verfahrens auch Fehlauslösungen vermieden werden sollen.

Wie oben bereits angedeutet, basiert das Rechenmodell zur Abschätzung der Temperatur des Radsatzlagers und/oder das Rechenmodell zur Abschätzung der Umgebungstemperatur des Schienenfahrzeugs jeweils auf einer Modellierung von wenigstens einiger der folgenden Elemente: Wärmekapazitäten von Bauteilen des Radsatzes bzw. des Radsatzlagers, Wärmeleitung in Bauteilen des Radsatzes bzw. des Radsatzlagers, Wärmeübergangswiderstände zwischen Bauteilen des Radsatzes bzw. Radsatzlagers, sowie erzwungene, durch erzwungene und freie Konvektion bedingter Wärmeübergang zwischen Bauteilen des Radsatzes bzw. Radsatzlagers und der Umgebung.

Weiterhin wird bei dem Rechenmodell zur Abschätzung der Temperatur des Radsatzlagers und/oder bei dem Rechenmodell zur Abschätzung der Umgebungstemperatur des Schienenfahrzeugs jeweils eine Grundkalibrierung bzw. Grundparametrierung durchgeführt, von welcher ausgehend die Korrekturglieder oder Korrekturterme zur Verbesserung der Genauigkeit der Rechenmodelle im Betrieb des Schienenfahrzeugs angepasst werden. Mit anderen Worten kann eine Eingangs- oder Grundkalibrierung der Rechenmodelle von den Fahrzeugparametern abgeleitet, mit Hilfe von Simulationen (z.B. finite Elemente) bestimmt werden oder basierend auf Messdaten erfolgen.

Die Erfindung betrifft auch eine Vorrichtung zur Ausführung des oben beschriebenen Verfahrens, wobei ein Temperatursensor zur Messung der Temperatur des vom Radsatzlager verschiedenen, aber mit dem Radsatzlager in direkter oder indirekter Weise in wärmeleitender Verbindung stehenden Bauteils des Radsatzes sowie ein Mikrocomputer vorgesehen sind, in welchem das Rechenmodell zur Abschätzung der Temperatur des Radsatzlager und/oder das Rechenmodell zur Abschätzung der Umgebungstemperatur des Schienenfahrzeugs implementiert sind.

Besonders bevorzugt ist dabei der Temperatursensor mit einem Geschwindigkeitssensor eines Gleitschutzgeräts des Schienenfahrzeugs zu einem Kombinationssensor zusammengefasst. Dann entsteht kein zusätzlicher Aufwand für den Temperatursensor durch die Sensorinstallation und Verkabelung.

Weiterhin ist das vom Radsatzlager verschiedene Bauteil des Radsatzes beispielsweise ein das Radsatzlager wenigstens teilweise abdeckender Radsatzlagerdeckel.

Weitere, die Erfindung fortbildende Maßnahmen werden nachstehend gemeinsam mit der Beschreibung eines bevorzugten Ausführungsbeispiels der Erfindung anhand der Figuren näher dargestellt. In der Zeichnung zeigt:
- Fig. 1: eine schematische Darstellung eines Radsatzlagers eines Schienenfahrzeugs mit einem Temperatursensor;
- Fig.2: ein schematisches Ersatzschaltbild eines Rechenmodells im Rahmen eines Verfahrens zum Abschätzen der Radsatzlagertemperatur des Radsatzlagers von Fig.1 bzw. der Umgebungstemperatur des Schienenfahrzeugs;
- Fig.3: ein Blockschaltbild zur Darstellung eines Verfahrens zum Abschätzen der Radsatzlagertemperatur des Radsatzlagers von Fig.1 ;
- Fig.4: ein Blockschaltbild zur Darstellung eines Verfahrens zum Abschätzen der Umgebungstemperatur des Schienenfahrzeugs;
- Fig.5: ein Blockschaltbild zur Darstellung eines kombinierten Verfahrens zum Abschätzen von Radsatzlagertemperaturen von Radsatzlagern eines Schienenfahrzeugs sowie zum Abschätzen der Umgebungstemperatur des Schienenfahrzeugs;
- Fig.6: ein Diagramm zur Darstellung von Temperaturverläufen an einem Versuchsstand.

### Beschreibung des Ausführungsbeispiels

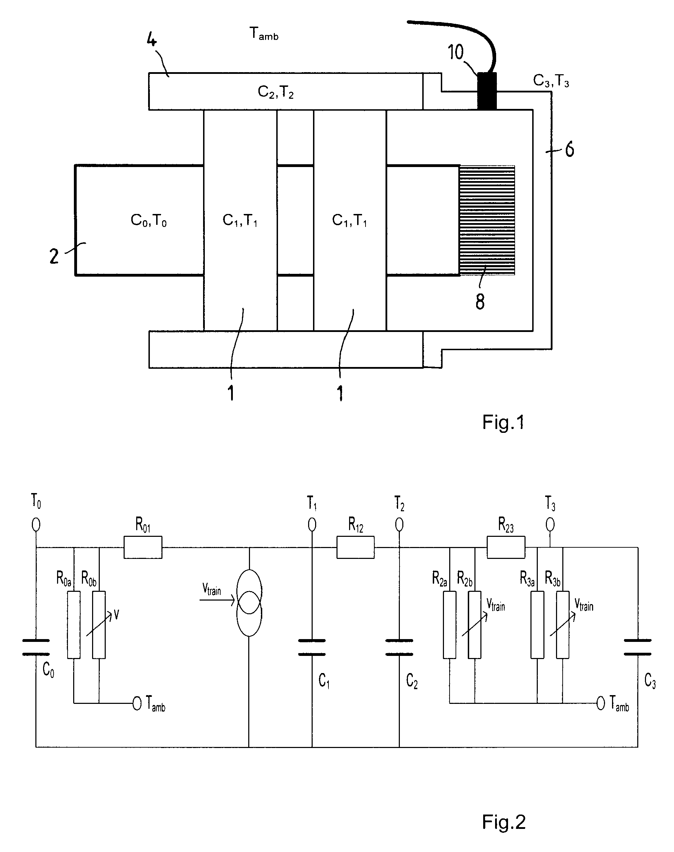

In Fig.1 ist eine schematische Darstellung eines Radsatzlagers 1 eines Schienenfahrzeugs gezeigt, wobei an einer Welle oder Achse 2 des Radsatzes endseitig zwei hier nicht explizit gezeigte Räder angeordnet sind. Dabei ist in Nachbarschaft zu den Rädern jeweils ein Radsatzlager 1 vorhanden, welches die Achse 2 an einem hier ebenfalls nicht gezeigten Drehgestell lagert. Bevorzugt handelt es sich bei dem Radsatzlager 1 um ein Doppellager, d.h. es sind zwei in axialer Richtung hintereinander angeordnete Radsatzlager beispielsweise in Form zweier Wälzlager vorhanden.

Die folgenden Ausführungen betreffen ein Verfahren und eine Vorrichtung zum Abschätzen der Temperatur des Radsatzlagers 1 mittels eines Rechenmodells. Das Rechenmodell zur Abschätzung der Temperatur des Radsatzlagers 1 basiert auf einer Modellierung der Wärmekapazitäten von Bauteilen des Radsatzes bzw. des Radsatzlagers 1, der Wärmeleitung in Bauteilen des Radsatzes bzw. des Radsatzlagers 1, der Wärmeübergangswiderstände zwischen Bauteilen des Radsatzes bzw. Radsatzlagers 1, sowie der erzwungenen, durch die Fahrgeschwindigkeit des Schienenfahrzeugs bedingten erzwungenen Konvektion, der freien Konvektion und des Wärmeübergangs zwischen den Bauteilen des Radsatzes bzw. Radsatzlagers 1 in die Umgebung. Die erzwungene Konvektion ist eine Funktion der Geschwindigkeit des Schienenfahrzeugs.

Ein elektrisches Ersatzschaltbild des Rechenmodells ist in Fig.2 gezeigt und weist die folgenden Elemente auf:

Die Achse 2 hat eine Wärmekapazität C₀, wobei eine Wärmeleitung, symbolisiert durch den Widerstand R₀₁ von der Achse zum Radsatzlager 1 mit der Wärmekapazität C₁ stattfindet bzw. umgekehrt. Denn Innenringe der vorzugsweise als Wälzlager ausgeführten Radsatzlager 1 stehen mit der Achse 2 in unmittelbar wärme übertragender Verbindung. Vereinfachend weisen beide zu einem Doppellager zusammengefasste Radsatzlager 1 die Wärmekapazität C1 auf. Weiterhin wird die freie und erzwungene Konvektion, d.h. der Wärmeübergang von der Achse 2 zur Umgebung durch die Widerstände R₀ₐ und R_{0b} symbolisiert. Die erzwungene Konvektion erfolgt aufgrund der Fahrgeschwindigkeit Vₜᵣₐᵢₙ des Schienenfahrzeugs. Es wird angenommen, dass die Achse 2 eine Temperatur T₀ aufweist.

Von den Radsatzlagern 1 mit der Wärmekapazität C1 findet eine Wärmeleitung zu einem gemeinsamen Gehäuse 4 der Radsatzlager 1 statt, welches die Wärmekapazität C₂ aufweist sowie zur Achse 2 mit der Wärmekapazität C₀ über den Widerstand R₀₁. Weiterhin findet ein von der Geschwindigkeit Vₜᵣₐᵢₙ des Schienenfahrzeugs abhängiger Wärmeeintrag in die Radsatzlager 1 statt. Es wird angenommen, dass die Radsatzlager 1 eine Temperatur T₁ aufweisen.

Die Wärmeleitung vom Gehäuse 4 der Radsatzlager 1 mit der Wärmekapazität C₂ zu den Radsatzlagern 1 (C₁) wird durch den Widerstand R₁₂ und zu einem Radsatzlagerdeckel 6 mit der Wärmekapazität C₃ durch den Widerstand R₂₃ symbolisiert. Die Widerstände R₂ₐ und R_{2b} kennzeichnen die freie und erzwungene Konvektion und damit den Wärmeübergang vom Gehäuse 4 in die Umgebung bzw. umgekehrt. Es wird angenommen, dass das Gehäuse 4 die Temperatur T₂ aufweist.

Die am Radsatzlagerdeckel 6 wirkende freie und erzwungene Konvektion und damit der Wärmeübergang von diesem in die Umgebung wird durch die Widerstände R₃ₐ und R_{3b} symbolisiert.

Das Gehäuse 4 steht dabei mit den äußeren Lagerringen der vorzugsweise als Wälzlager ausgeführten Radsatzlager 1 in unmittelbarer wärme übertragender Verbindung wie auch stirnseitig mit dem Radsatzlagerdeckel 6. Die Wärmeleitung zwischen dem Gehäuse 4 und dem Radsatzlagerdeckel 6 erfolgt über den Widerstand R₂₃. Der Wärmeübergang zwischen der Umgebung mit der Umgebungstemperatur T_{amb} und dem Radsatzlagerdeckel 6 durch freie Konvektion und erzwungene Konvektion aufgrund der Fahrgeschwindigkeit Vₜᵣₐᵢₙ ist durch die Wärmeübergangswiderstände R₃ₐ und R_{3b} gekennzeichnet.

Der Radsatzlagerdeckel 6 umschließt das Ende der Achse 2, welches über die Radsatzlager 1 ein Stück weit axial hinaus ragt und an welchem ein Polrad 8 eines hier ansonsten nicht gezeigten Geschwindigkeitssensors ausgebildet ist. Der Geschwindigkeitssensor meldet ein Geschwindigkeitssignal an ein Gleitschutzgerät des Schienenfahrzeugs, um schlupfgeregelte Bremsungen ausführen zu können.

Anstatt die Temperatur T₁ des Radsatzlagers 1 direkt zu messen, wird die Temperatur T₃ des Radsatzlagerdeckels 6 mittels eines Temperatursensors 10 gemessen. Weiterhin ist auch ein hier nicht gezeigter Sensor zur direkten oder indirekten Messung der Fahrgeschwindigkeit Vₜᵣₐᵢₙ des Schienenfahrzeugs vorgesehen sowie zunächst auch ein hier nicht gezeigter Sensor zur Messung der Umgebungstemperatur T_{amb}.

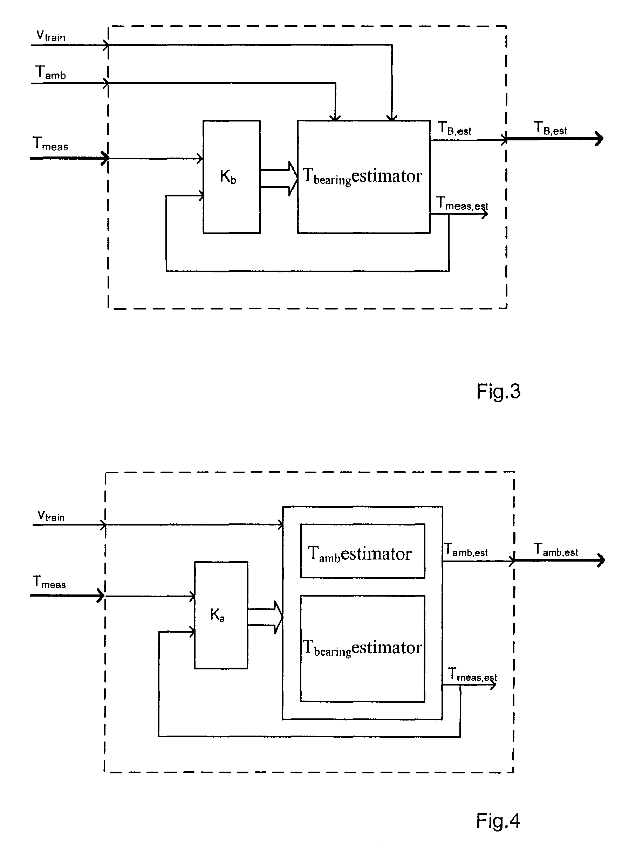

Beim dem in Fig.3 als Blockschaltbild gezeigten bevorzugten Ausführungsbeispiel des Rechenmodells T_{bearing,}estimator wird die durch den Temperatursensor 8 gemessene Temperatur T₃ des Radsatzlagerdeckels 6 als Tₘₑₐₛ bezeichnet. Weiterhin wird in Fig.3 die vom Rechenmodell T_{bearing},estimator zu schätzende Temperatur T₁ der Radsatzlager 1 mit T_{B,est} bezeichnet. Die Bezeichnung der Umgebungstemperatur T_{amb} wie auch die der Geschwindigkeit Vₜᵣₐᵢₙ des Schienenfahrzeugs bleibt hingegen unverändert.

Das Rechenmodell T_{bearing},estimator ist aufgrund seines in Fig.2 dargestellten Aufbaus dann in der Lage, abhängig von der Geschwindigkeit Vₜᵣₐᵢₙ und von der Umgebungstemperatur T_{amb} des Schienenfahrzeugs als Eingangsgrößen die Temperatur T_{B,est} der Radsatzlager 1 abzuschätzen.

Zusätzlich wird die Temperatur Tₘₑₐₛ des Radsatzlagerdeckels 6, welcher mit dem Gehäuse 4 und den Radsatzlagern 1 in wärmeleitender Verbindung steht, im Betrieb als Messtemperatur durch den Temperatursensor 10 gemessen. Parallel dazu wird die Temperatur des Radsatzlagerdeckels 6 auch als Schätztemperatur T_{meas,est} mit Hilfe des Rechenmodells T_{bearing} estimator abgeschätzt.

Zur Verbesserung der Genauigkeit des Rechenmodells T_{bearing} estimator im Hinblick auf die Abschätzung der Temperatur T_{B,est} der Radsatzlager 1 weist das Rechenmodell T_{bearing} estimator ein Korrekturglied K_{b} auf, mit welchem es anhand eines Vergleichs der Messtemperatur Tₘₑₐₛ des Radsatzlagerdeckels 6 mit der Schätztemperatur T_{meas,est} des Radsatzlagerdeckels 6 ständig, zeitweise oder zyklisch kalibriert bzw. abgeglichen wird.

Mit anderen Worten erfolgt eine Eigenkalibrierung oder ein Eigenabgleich des Rechenmodells T_{bearing} estimator, welches die Abschätzung der Temperatur T_{B,est} der Radsatzlager 1 zum Ziel hat, durch Messung und Abschätzung der Temperatur an einem von den Radsatzlagern 1 verschiedenen Stelle des Radsatzes, welche aber durch Wärmeleitung bzw. Wärmeübergang mit den Radsatzlagern 1 thermodynamisch in Verbindung steht. Diese Stelle ist bevorzugt der Radsatzlagerdeckel 6, weil an diesem zum einen ein Temperatursensor 10 aus Platzgründen einfacher angebracht werden kann als an den Radsatzlagern 1 selbst. Zum andern ist an dem Radsatzlagerdeckel 6 der mit dem Polrad 8 zusammen wirkende Geschwindigkeitssensor für den Gleitschutz angeordnet, so dass der Temperatursensor 10 mit dem Geschwindigkeitssensor zu einem Kombinationssensor 10 vorteilhaft zusammengefasst werden kann.

Weiterhin wird bei dem Rechenmodell T_{bearing} estimator eine Grundkalibrierung oder Grundparametrierung durchgeführt, von welcher ausgehend das Korrekturglied K_{b} oder der Korrekturterm K_{b} zur Verbesserung der Genauigkeit des Rechenmodells T_{bearing} estimator im Betrieb des Schienenfahrzeugs angepasst wird. Die Eingangs- oder Grundkalibrierung des Rechenmodells T_{bearing} estimator wird beispielsweise von den Fahrzeugparametern abgeleitet, mit Hilfe von Simulationen (z.B. finite Elemente) bestimmt oder kann basierend auf Messdaten erfolgen.

Besonders bevorzugt wird das oben beschriebene Verfahren weiter dadurch weiter gebildet, dass es um Abschätzen der Temperaturen mehrerer Radsatzlager 1 von Radsätzen des Schienenfahrzeugs geeignet ist. Dazu ist wenigstens einigen der Radsatzlager 1, bevorzugt allen Radsatzlagern 1 des Schienenfahrzeugs jeweils ein Rechenmodell T_{amb}estimator zugeordnet, um abhängig von der Geschwindigkeit Vₜᵣₐᵢₙ des Schienenfahrzeugs als Eingangsgröße des jeweiligen Rechenmodells T_{amb}estimator jeweils einen Wert T_{amb,est} für die Umgebungstemperatur des Schienenfahrzeugs abzuschätzen. Ein solches Rechenmodell T_{amb}estimator ist als Blockschaltbild in Fig.4 gezeigt und beispielsweise mit dem dem jeweiligen Radsatzlager 1 zugeordneten Rechenmodell T_{bearing} estimator zusammengefasst.

Zur Verbesserung der Genauigkeit der Rechenmodelle T_{amb}estimator im Hinblick auf die jeweilige Abschätzung des Werts T_{amb} für die Umgebungstemperatur des Schienenfahrzeugs ist für jedes der Rechenmodelle T_{amb}estimator ein Korrekturglied Kₐ vorgesehen, mit welchem das betreffende Rechenmodell T_{amb}estimator anhand eines Vergleichs der jeweiligen Schätztemperatur T_{meas,est}, mit der jeweiligen Messtemperatur Tₘₑₐₛ des jeweiligen Radsatzlagerdeckels 6 des betreffenden Radsatzlagers 1 ständig, zeitweise oder zyklisch kalibriert oder abgeglichen wird. Somit erfolgt der dynamische Abgleich der Rechenmodelle T_{amb}estimator zur Abschätzung der Umgebungstemperatur T_{amb} wie bei dem in Fig.3 gezeigten Rechenmodell T_{bearing} estimator.

Ein solches Rechenmodell T_{amb}estimator, welches die in Fig.2 gezeigte Struktur hat, ist dann ausgebildet, dass es eine Umgebungstemperatur T_{amb} abschätzen kann, welche vorhanden ist, damit sich die weiterhin gemessene Temperatur Tₘₑₐₛ an dem Radsatzlagerdeckel 6 bei einem intakten Radsatzlager 1 einstellt. Falls jedoch eines oder mehrere Radsatzlager 1 defekt und beispielsweise heiß gelaufen sind, dann würden die dann ebenfalls in das Rechenmodell T_{amb}estimator eingehenden höheren Temperaturen der betreffenden Radsatzlager 1 das Abschätzergebnis für die Umgebungstemperatur T_{amb} verfälschen.

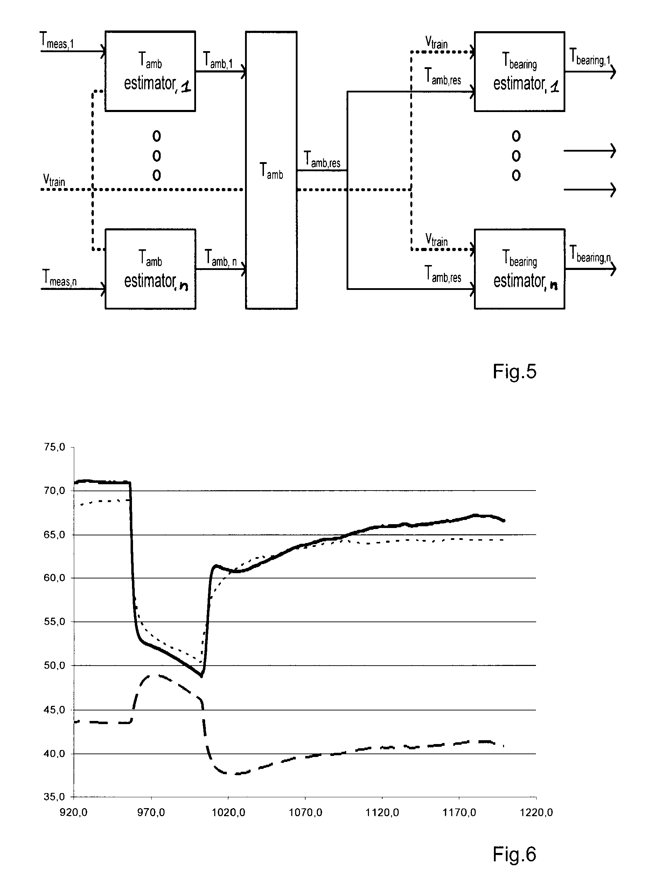

Um dies zu verhindern wird bevorzugt, wie Fig.5 veranschaulicht aus den anhand der den Radsatzlagern 1...n zugeordneten Rechenmodellen T_{amb}estimator,₁... T_{amb}estimatorₙ geschätzten Werten T_{amb,1}...T_{amb,n} für die Umgebungstemperatur eine resultierende Umgebungstemperatur T_{amb,res} gebildet, welche jeweils als Eingangsgröße für die Rechenmodelle T_{bearing},estimator, _{1......} T_{bearing},estimator, ₙ herangezogen wird, welche zum Abschätzen des Werts T_{B,est,1...}T_{B,est,n} der jeweiligen Temperatur des jeweiligen Radsatzlagers 1 dienen. Dadurch können Verfälschungen des Schätzergebnisses für die Umgebungstemperatur T_{amb} durch heiß gelaufene Radsatzlager 1 ausgemittelt werden. Damit ein Heißläufer an einem der Radsatzlager 1 daher nicht zu einer Abschätzung einer hohen Umgebungstemperatur durch das betreffende Rechenmodell T_{amb}estimator führt, sondern zu einer entsprechend hohen Radsatzlagertemperatur T_{b,est}, wird aus den einzelnen Schätzungen für die Umgebungstemperatur T_{amb} ein resultierender Wert gebildet.

Dies kann beispielsweise dadurch realisiert werden, dass nur die n niedrigsten geschätzten Umgebungstemperaturen T_{amb} herangezogen werden, beispielsweise als Mittelwert der n niedrigsten abgeschätzten Umgebungstemperaturen T_{amb}. Der resultierende Wert der Umgebungstemperatur T_{amb, res} wird dann als einheitliche Eingangsgröße für die Rechenmodelle T_{amb}estimator₁ bis T_{amb}estimatorₙ zur Abschätzung der Temperaturen T_{bearing,1} bis T_{bearing,n} der betreffenden Radsatzlager 1 herangezogen.

In Fig.6 ist ein Temperatur-Zeit-Diagramm als Ergebnis eines Versuchs an einem Radsatzlagerprüfstand dargestellt, an welchem das Rechenmodell T_{bearing}estimator von Fig.2 und Fig.3 überprüft wurde. Hierzu wurde, jedoch nur für die Zwecke des Radsatzlagerprüfstands ein Temperatursensor verwendet, welcher direkt an der Lastzone der Radsatzlager 1 angeordnet wurde und mit welchem die dort herrschende Temperatur direkt als T_{B,meas} über der Zeit gemessen wurde. Der Verlauf der am Radsatzlager 1 direkt gemessenen Temperatur ist in Fig.6 in gepunkteter Linie (···) gezeigt. Als durchgezogene Linie (-) ist der Verlauf der mittels des Rechenmodells T_{bearing}estimator von Fig.2 und Fig.3 abgeschätzten Temperatur T_{B,est} gezeigt und in gestrichelter Linie (---) die am Radsatzlagerdeckel 6 gemessene Temperatur Tₘₑₐₛ. In das Rechenmodell T_{bearing}estimator gingen auch die hier vorzugsweise gemessene Umgebungstemperatur T_{amb} sowie eine durch Ventilatoren simulierte Fahrgeschwindigkeit Vₜᵣₐᵢₙ des Schienenfahrzeugs. Der Vergleich zwischen der durch das Rechenmodell T_{bearing}estimator abgeschätzten Temperatur T_{B,est} (durchgezogene Linie) und der gemessenen Temperatur T_{B,meas} (gepunktete Linie) zeigt eine gute Übereinstimmung und nur geringe Anweichungen.

Die Temperaturabschätzung wird dann zur Erkennung heiß gelaufener Lager (Heißläufererkennung) heran gezogen, indem etwa der abgeschätzte Temperaturwert T_{B,est} mit einem Temperaturgrenzwert verglichen und bei Überschreiten des Temperaturgrenzwerts durch den abgeschätzten Temperaturwert T_{B,est} ein Signal für ein heiß gelaufenes Radsatzlager 1 und bei einem Unterschreiten des Temperaturgrenzwerts durch den abgeschätzten Temperaturwert T_{B,est} ein Signal für einen thermisch ungestörten Betrieb des betreffenden Radsatzlagers 1 erzeugt wird.

Zusätzlich oder alternativ wird die durch das erfindungsgemäße Verfahren abgeschätzte Temperatur T_{B,est} des Radsatzlagers 1 zum Vergleich mit einem Temperaturgrenzwert herangezogen, um beurteilen zu können, ob eine dem Radsatzlager 1 zugeordnete oder benachbarte (hier nicht gezeigte) Bremseinrichtung, insbesondere Scheibenbremse sich in einem gelösten oder zugespannten Zustand befindet.

Dann liefert eine den Temperaturgrenzwert überschreitende abgeschätzte Temperatur T_{B,est} des Radsatzlagers 1 ein Signal für einen zugespannten Zustand der dem Radsatzlager 1 zugeordneten oder benachbarten Reibungsbremse und eine den Temperaturgrenzwert unterschreitende abgeschätzte Temperatur T_{B,est} des Radsatzlagers ein Signal für einen gelösten Zustand der dem Radsatzlager 1 zugeordneten oder benachbarten Reibungsbremse.

Dem liegt die Erfahrung zugrunde, dass beim Zuspannen einer Reibungsbremse Reibungswärme entsteht. Diese Reibungswärme wird dann durch Wärmeübergang, Wärmeleitung entlang der Achse 2 und/oder Konvektion auf das benachbarte Radsatzlager 1 übertragen.

Eine relativ niedrige abgeschätzte Radsatzlagertemperatur T_{B,est} deutet dann nicht nur auf einen normalen Lauf des Radsatzlagers 1 hin, sondern auch auf einen gelösten Zustand der benachbarten Reibungsbremse. Demgegenüber liefert eine relativ hohe abgeschätzte Radsatzlagertemperatur T_{B,est} einen Hinweis auf ein heiß gelaufenes Radsatzlager 1 und/oder auf einen zugespannten Zustand der in Bezug zu dem betreffenden Radsatzlager 1 benachbarten Reibungsbremse.

Mit der anhand des erfindungsgemäßen Verfahrens abgeschätzten Radsatzlagertemperatur T_{B,est} können daher auch die Funktionen (zugespannt oder gelöst) von in Bezug zu dem Radsatzlager 1 benachbarten Reibungsbremsen des Schienenfahrzeugs überwacht werden.

### Bezugszeichenliste

- 1: Radsatzlager
- 2: Achse
- 4: Gehäuse
- 6: Radsatzlagerdeckel
- 8: Polrad
- 10: Temperatursensor

## Patentansprüche

1. Verfahren zum Abschätzen der Temperatur (T_{B,est}) eines Radsatzlagers (1) eines Radsatzes eines Schienenfahrzeugs mittels eines Rechenmodells (T_{bearing} estimator), wobei
- das Rechenmodell (T_{bearing}, estimator) ausgebildet ist, um abhängig von der Geschwindigkeit (Vₜᵣₐᵢₙ) und der Umgebungstemperatur (T_{amb}) des Schienenfahrzeugs als Eingangsgrößen des Rechenmodells (T_{bearing}estimator) die Temperatur (T_{B,est}) des betreffenden Radsatzlagers (1) abzuschätzen, und zusätzlich
- die Temperatur eines vom Radsatzlager (1) verschiedenen, aber mit dem Radsatzlager (1) in direkter oder indirekter Weise in wärmeleitender Verbindung stehenden Bauteils (6) des Radsatzes im Betrieb als Messtemperatur (Tₘₑₐₛ) gemessen wird,
- die Temperatur des vom Radsatzlager (1) verschiedenen Bauteils (6) mit Hilfe des Rechenmodells (T_{bearing} estimator) als Schätztemperatur (T_{meas,est}) abgeschätzt wird,
- zur Verbesserung der Genauigkeit des Rechenmodells (T_{bearing} estimator) im Hinblick auf die Abschätzung der Temperatur (T_{B,est}) des Radsatzlagers (1) das Rechenmodell (T_{bearing}estimator) ein Korrekturglied (K_{b}) aufweist, mit welchem es anhand eines Vergleichs der Messtemperatur (Tₘₑₐₛ) mit der Schätztemperatur (T_{meas,est}) ständig, zeitweise oder zyklisch kalibriert bzw. abgeglichen wird.

2. Verfahren zum Abschätzen der Temperaturen mehrerer Radsatzlager von Radsätzen eines Schienenfahrzeugs nach Anspruch 1, **dadurch gekennzeichnet, dass**
- wenigstens einigen der Radsatzlager (1...n) jeweils ein Rechenmodell (T_{amb}estimator,₁... T_{amb}estimator,ₙ) zugeordnet ist, um abhängig von der Geschwindigkeit (Vₜᵣₐᵢₙ) des Schienenfahrzeugs als Eingangsgröße des jeweiligen Rechenmodells (T_{amb}estimator,₁... T_{amb}estimator,ₙ) jeweils einen Wert (T_{amb,1}.... T_{amb.n}) für die Umgebungstemperatur des Schienenfahrzeugs abzuschätzen, wobei
- zur Verbesserung der Genauigkeit der wenigstens einigen der Radsatzlager (1...n) zugeordneten Rechenmodelle (T_{amb}estimator,₁... T_{amb}estimator,ₙ) im Hinblick auf die jeweilige Abschätzung des Werts (T_{amb,1} ... T_{amb,n}) für die Umgebungstemperatur des Schienenfahrzeugs für jedes der Rechenmodelle (T_{amb}estimator,₁... T_{amb} estimator,ₙ) ein Korrekturglied (K_{a,1}...K_{a,n}) vorgesehen ist, mit welchem das betreffende Rechenmodell (T_{amb}estimator,₁... T_{amb}estimatorₙ) anhand eines Vergleichs der jeweiligen Schätztemperatur (T_{meas,est,1} ... T_{meas,est,n}) mit der jeweiligen Messtemperatur (T_{meas,1}...T_{meas,n}) des jeweiligen, jeweils vom betreffenden Radsatzlager (1 ... n) verschiedenen Bauteils (6) ständig, zeitweise oder zyklisch kalibriert wird, und
- dass aus den anhand der wenigstens einigen der Radsatzlager (1...n) zugeordneten Rechenmodellen (T_{amb}estimator,₁... T_{amb}estimator,ₙ) geschätzten Werten (T_{amb,1}.... T_{amb,n}) für die Umgebungstemperatur eine resultierende Umgebungstemperatur (T_{amb,res}) gebildet wird, welche jeweils als Eingangsgröße für die Rechenmodelle (T_{bearing,}estimator, ₁... T_{bearing},estimator, ₙ) herangezogen wird, welche zum Abschätzen des Werts (T_{B, est,1} ... T_{B,est,n}) der jeweiligen Temperatur des jeweiligen Radsatzlagers (1...n) vorgesehen sind.

3. Verfahren nach Anspruch 2, **dadurch gekennzeichnet, dass** aus den anhand der wenigstens einigen der Radsatzlager (1...n) zugeordneten Rechenmodellen (T_{amb}estimator,₁... T_{amb}estimator,ₙ) geschätzten Werten (T_{amb,1}....T_{amb,n}) für die Umgebungstemperatur die resultierende Umgebungstemperatur (T_{amb,res}) durch Mittelwert- oder Medianbildung der n niedrigsten abgeschätzten Umgebungstemperaturen (T_{amb}) berechnet wird.

4. Verfahren nach einem der vorhergehenden Ansprüche, **dadurch gekennzeichnet, dass** das Rechenmodell (T_{bearing},estimator) zur Abschätzung der Temperatur des Radsatzlagers (1) und/oder das Rechenmodell (T_{amb}estimator,₁... T_{amb} estimatorₙ) zur Abschätzung der Umgebungstemperatur (T_{amb}) des Schienenfahrzeugs auf einer Modellierung von wenigstens einiger der folgenden Elemente basiert:
Wärmekapazitäten von Bauteilen (1, 2, 4, 6) des Radsatzes bzw. des Radsatzlagers, Wärmeleitung in Bauteilen (1, 2, 4, 6) des Radsatzes bzw. des Radsatzlagers, Wärmeübergangswiderstände zwischen Bauteilen (1, 2, 4, 6) des Radsatzes bzw. Radsatzlagers, sowie erzwungene, durch erzwungene und freie Konvektion bedingter Wärmeübergang zwischen Bauteilen (1, 2, 4, 6) des Radsatzes bzw. Radsatzlagers und der Umgebung.

5. Verfahren nach einem der vorhergehenden Ansprüche, **dadurch gekennzeichnet, dass** bei dem Rechenmodell (T_{bearing}estimator) zur Abschätzung der Temperatur des Radsatzlagers (1) und/oder bei dem Rechenmodell (T_{amb}estimator) zur Abschätzung der Umgebungstemperatur (T_{amb}) des Schienenfahrzeugs jeweils eine Grundkalibrierung oder Grundparametrierung durchgeführt wird, von welcher ausgehend die Korrekturglieder (Kₐ, K_{b}) zur Verbesserung der Genauigkeit der Rechenmodelle (Tb_{earing}estimator, T_{amb}estimator) im Betrieb des Schienenfahrzeugs angepasst werden.

6. Verfahren nach einem der vorhergehenden Ansprüche, **dadurch gekennzeichnet, dass** bei einer einen Temperaturgrenzwert überschreitenden abgeschätzten Temperatur (T_{B}, ₑₛₜ) des Radsatzlagers (1) ein Signal für einen zugespannten Zustand wenigstens einer dem Radsatzlager (1) zugeordneten oder benachbarten Reibungsbremse und bei einer den Temperaturgrenzwert unterschreitenden abgeschätzten Temperatur (T_{B, est}) des Radsatzlagers (1) ein Signal für einen gelösten Zustand der dem Radsatzlager (1) zugeordneten oder benachbarten Reibungsbremse geliefert wird.

7. Verfahren nach einem der Ansprüche 1 bis 5, **dadurch gekennzeichnet, dass** bei einer einen Temperaturgrenzwert überschreitenden abgeschätzten Temperatur (T_{B}, ₑₛₜ) des Radsatzlagers (1) ein Signal für ein heiß gelaufenes Radsatzlager (1) und bei einer den Temperaturgrenzwert unterschreitenden abgeschätzten Temperatur (T_{B, est}) des Radsatzlagers (1) ein Signal für einen thermisch ungestörten Betrieb des Radsatzlagers (1) geliefert wird.

8. Vorrichtung zum Abschätzen der Temperatur (T_{B}, ₑₛₜ) eines Radsatzlagers (1) eines Radsatzes eines Schienenfahrzeugs mittels eines Rechenmodells (T_{bearing} estimator), wobei
- ein Temperatursensor (10) zur Messung der Temperatur eines vom Radsatzlager (1) verschiedenen, aber mit dem Radsatzlager (1) in direkter oder indirekter Weise in wärmeleitender Verbindung stehenden Bauteils (6) des Radsatzes sowie
- ein Mikrocomputer vorgesehen sind, in welchem das Rechenmodell (T_{bearing}. estimator) implementiert ist, um abhängig von der Geschwindigkeit (Vₜᵣₐᵢₙ) und der Umgebungstemperatur (T_{amb}) des Schienenfahrzeugs als Eingangsgrößen des Rechenmodells (T_{bearing}estimator) die Temperatur (T_{B,est}) des betreffenden Radsatzlagers (1) abzuschätzen, und zusätzlich
- die Temperatur des vom Radsatzlager (1) verschiedenen, aber mit dem Radsatzlager (1) in direkter oder indirekter Weise in wärmeleitender Verbindung stehenden Bauteils (6) des Radsatzes im Betrieb von dem Temperatursensor (10) als Messtemperatur (Tₘₑₐₛ) gemessen wird,
- die Temperatur des vom Radsatzlager (1) verschiedenen Bauteils (6) mit Hilfe des Rechenmodells (T_{bearing} estimator) als Schätztemperatur (T_{meas,est}) abgeschätzt wird,
- zur Verbesserung der Genauigkeit des Rechenmodells (T_{bearing} estimator) im Hinblick auf die Abschätzung der Temperatur (T_{B,est}) des Radsatzlagers (1) das Rechenmodell (T_{bearing}estimator) ein Korrekturglied (K_{b}) aufweist, mit welchem es anhand eines Vergleichs der Messtemperatur (Tₘₑₐₛ) mit der Schätztemperatur (T_{meas,est}) ständig, zeitweise oder zyklisch kalibriert bzw. abgeglichen wird.

9. Vorrichtung nach Anspruch 8, **dadurch gekennzeichnet, dass** der Temperatursensor (10) mit einem Geschwindigkeitssensor eines Gleitschutzgeräts des Schienenfahrzeugs zu einem Kombinationssensor zusammengefasst ist.

10. Vorrichtung nach Anspruch 8 oder 9, **dadurch gekennzeichnet, dass** das vom Radsatzlager (1) verschiedene Bauteil (6) des Radsatzes ein das Radsatzlager (1) wenigstens teilweise abdeckender Radsatzlagerdeckel (6) ist.

## Claims

1. Method for estimating the temperature (T_{B,est}) of a wheel set bearing (1) of a wheel set of a rail vehicle by means of a calculation model (T_{bearing}estimator), wherein
- the calculation model (T_{bearing}estimator) is designed to estimate the temperature (T_{B,est}) of the particular wheel set bearing (1) as a function of the speed (Vₜᵣₐᵢₙ) and the ambient temperature (T_{amb}) of the rail vehicle as input variables of the calculation model (T_{bearing}estimator), and in addition
- the temperature of a component (6) of the wheel set, which is different from the wheel set bearing (1) but is directly or indirectly connected to the wheel set bearing (1) in a thermally conductive manner, is measured during operation as a measured temperature (Tₘₑₐₛ),
- the temperature of the component (6) which is different from the wheel set bearing (1) is estimated using the calculation model (T_{bearing}estimator) as an estimated temperature (T_{meas,est}),
- the calculation model (T_{bearing}estimator) has a correction element (K_{b}) in order to improve the accuracy of the calculation model (T_{bearing}estimator) with respect to the estimation of the temperature (T_{B,est}) of the wheel set bearing (1), with which correction element (K_{b}) said calculation model (T_{bearing}estimator) is continuously, temporarily or cyclically calibrated or adjusted on the basis of a comparison of the measured temperature (Tₘₑₐₛ) with the estimated temperature (T_{meas,est}).

2. Method for estimating the temperatures of a plurality of wheel set bearings of wheel sets of a rail vehicle according to claim 1, **characterised in that in that**
- at least some of the wheel set bearings (1...n) are respectively assigned a calculation model (T_{amb}estimator,_{1...} T_{amb}estimator,ₙ), in order to estimate in each case a value (T_{amb,1}... T_{amb,n}) for the ambient temperature of the rail vehicle as a function of the speed (Vₜᵣₐᵢₙ) of the rail vehicle as an input variable of the respective calculation model (T_{amb}estimator,_{1...} T_{amb}estimator,ₙ), wherein
- a correction element (K_{a,1}... K_{a,n}) is provided in order to improve the accuracy of the calculation models (T_{amb}estimator,_{1...} T_{amb}estimator,ₙ) assigned to at least some of the wheel set bearings (1...n) in relation to the respective estimation of the value (T_{amb,1}... T_{amb,n}) for the ambient temperature of the rail vehicle for each of the calculation models (T_{amb}estimator, _{1...} T_{amb}estimator,ₙ), with which correction element (K_{a,1} ... K_{a,n}) the particular calculation model (T_{amb}estimator,_{1...} T_{amb}estimator,ₙ) is continuously, temporarily or cyclically calibrated on the basis of a comparison of the respective estimated temperature (T_{meas,est,1...} T_{meas,est,n}) with the respective measured temperature (T_{meas,est,1...} T_{mes,n}) of the respective component (6) which is respectively different from the particular wheel set bearing (1... n), and
- **in that** a resulting ambient temperature (T_{amb,res}) is formed from the values (T_{amb,1}...T_{amb,n}) for the ambient temperature, which are estimated on the basis of the calculation models (T_{amb}estimator,_{1...} T_{amb}estimator,ₙ) assigned to at least some of the wheel set bearings (1...n), which ambient temperature (T_{amb,res}) is respectively used as an input variable for the calculation models (T_{bearing},estimator,_{1...} T_{bearing},estimator,ₙ) which are provided for estimating the value (T_{B, est,1}... T_{B,est,n}) of the respective temperature of the respective wheel set bearing (1...n).

3. Method according to claim 2, **characterised in that** the resulting ambient temperature (T_{amb,res}) is calculated by the formation of mean values or medium values of the n lowest estimated ambient temperatures (T_{amb}) from the values (T_{amb,1} ... _{Tamb,n}) for the ambient temperature which are estimated on the basis of the calculation models (T_{amb}estimator,_{1...} T_{amb}estimator,ₙ) assigned to at least some of the wheel set bearings (1...n).

4. Method according to any of the preceding claims, **characterised in that** the calculation model (T_{bearing},estimator) for estimating the temperature of the wheel set bearing (1) and/or the calculation model (T_{amb}estimator,_{1...} T_{amb}estimator,ₙ) for estimating the ambient temperature (T_{amb}) of the rail vehicle is/are based on a modelling of at least some of the following elements: thermal capacities of components (1, 2, 4, 6) of the wheel set or of the wheel set bearing, conduction of heat in components (1, 2, 4, 6) of the wheel set or of the wheel set bearing, heat transfer resistances between components (1, 2, 4, 6) of the wheel set or of the wheel set bearing, and forced transfer of heat, brought about by forced and free convection, between components (1, 2, 4, 6) of the wheel set or of the wheel set bearing and the surroundings.

5. Method according to any of the preceding claims, **characterised in that** basic calibration or basic parameterization is respectively carried out in the calculation model (T_{bearing}estimator) for estimating the temperature of the wheel set bearing (1) and/or in the calculation model (T_{amb}estimator) for estimating the ambient temperature (T_{amb}) of the rail vehicle, on the basis of which basic calibration the correction elements (Kₐ, K_{b}) are adapted in order to improve the accuracy of the calculation models (Tb_{earing}estimator, T_{amb}estimator) during operation of the rail vehicle.

6. Method according to any of the preceding claims, **characterised in that** an estimated temperature (T_{B,est}) of the wheel set bearing (1) which exceeds the temperature limiting value supplies a signal for an applied state of at least one friction brake which is assigned or adjacent to the wheel set bearing (1) and an estimated temperature (T_{B,est}) of the wheel set bearing (1) which falls below the temperature limiting value supplies a signal for a released state of the friction brake which is assigned or adjacent to the wheel set bearing (1).

7. Method according to any of claims 1 to 5, **characterised in that** an estimated temperature (T_{B,est}) of the wheel set bearing (1) which exceeds the temperature limiting value supplies a signal for a wheel set bearing (1) which has run hot and an estimated temperature (T_{B,est}) of the wheel set bearing (1) which falls below the temperature limiting value supplies a signal for a thermally undisturbed operation of the wheel set bearing (1).

8. Device for estimating the temperature (T_{B,est}) of a wheel set bearing (1) of a wheel set of a rail vehicle by means of a calculation model (T_{bearing}estimator), wherein
- a temperature sensor (10) is provided for measuring the temperature of a component (6) of the wheel set which is different from the wheel set bearing (1) but which is directly or indirectly connected to the wheel set bearing (1) in a thermally conductive manner, and
- a microcomputer is provided in which the calculation model (T_{bearing}estimator) is implemented in order to estimate the temperature (T_{B,est}) of the particular wheel set bearing (1) as a function of the speed (Vₜᵣₐᵢₙ) and the ambient temperature (T_{amb}) of the rail vehicle as input variables of the calculation model (T_{bearing}estimator), and additionally
- the temperature of the component (6) of the wheel set which is different from the wheel set bearing (1) but which is directly or indirectly connected to the wheel set bearing (1) in a thermally conductive manner is measured during operation by the temperature sensor (10) as a measured temperature (Tₘₑₐₛ),
- the temperature of the component (6) which is different from the wheel set bearing (1) is estimated using the calculation model (T_{bearing}estimator) as an estimated temperature (T_{meas,est}),
- the calculation model (T_{bearing}estimator) has a correction element (K_{b}) in order to improve the accuracy of the calculation model (T_{bearing}estimator) with respect to the estimation of the temperature (T_{B,est}) of the wheel set bearing (1), with which correction element (K_{b}) said calculation model (T_{bearing}estimator) is continuously, temporarily or cyclically calibrated or adjusted on the basis of a comparison of the measured temperature (Tₘₑₐₛ) with the estimated temperature (T_{meas,est}).

9. Device according to claim 8, **characterised in that** the temperature sensor (10) is combined with a speed sensor of an anti-skid device of the rail vehicle to form a combination sensor.

10. Device according to claim 8 or 9, **characterised in that** the component (6) of the wheel set which is different from the wheel set bearing (1) is a wheel set bearing cover (6) which at least partially covers the wheel set bearing (1).

## Revendications

1. Procédé d'estimation de la température (T_{B}, est) d'une boîte (1) d'un essieu d'un véhicule ferroviaire au moyen d'un modèle (T_{Bearing} estimator) de calcul, dans lequel
- on forme le modèle (T_{Bearing} estimator) de calcul pour estimer la température (T_{B, est}) de la boîte (1) d'essieu concernée en fonction de la vitesse (V_{Train}) et de la température (T_{amb}) ambiante du véhicule ferroviaire comme grandeurs d'entrée du modèle (T_{Bearing} estimator) de calcul et en outre
- on mesure comme température (Tₘₑₐₛ) mesurée en fonctionnement la température d'un constituant (6) de l'essieu différent de la boîte (1) de l'essieu, mais en liaison de conduction de la chaleur d'une manière directe ou indirecte avec la boîte (1) de l'essieu,
- on estime comme température (T_{meas, est}) estimée la température du constituant (6) différent de la boîte (1) de l'essieu à l'aide du modèle (T_{Bearing} estimator) de calcul,
- pour améliorer la précision du modèle (T_{Bearing} estimator) de calcul en ce qui concerne l'estimation de la température (T_{B, est}) de la boîte (1) de l'essieu, le modèle (T_{Bearing} estimator) de calcul a un élément (K_{b}) de correction par lequel il étalonne ou égalise constamment de temps en temps ou cycliquement au moyen d'une comparaison de la température (Tₘₑₐₛ) mesurée à la température (Tₘₑₐₛ) estimée.

2. Procédé d'estimation des températures de plusieurs boîtes d'essieu d'un véhicule ferroviaire suivant la revendication 1, **caractérisé en ce que**
- on associe respectivement un modèle (T_{amb}estimator, _{1...} T_{amb}estimator,ₙ) de calcul à certaines des boîtes (1...n) d'essieu pour évaluer en fonction de la vitesse (V_{Train}) du véhicule ferroviaire comme grandeur d'entrée du modèle (T_{amb}estimator,_{1...} T_{amb}estimator,ₙ) de calcul respectif, respectivement une valeur (T_{amb,1...} T_{amb,n}) de la température ambiante du véhicule ferroviaire,
- pour améliorer la précision des modèles (T_{amb}estimator,_{1...} T_{amb}estimator,ₙ) de calcul associés à au moins certaines des boîtes (1...n) d'essieu en ce qui concerne l'évaluation respective de la valeur (T_{amb,1...} T_{amb,n}) de la température ambiante du véhicule ferroviaire pour chacun des modèles (T_{amb}estimator,₁... T_{amb}estimator,ₙ) de calcul, on prévoit un élément (K_{a,1}... K_{a,n}) de correction, par lequel le modèle (T_{amb}estimator, _{1...} T_{amb}estimator,ₙ) de calcul est étalonné constamment de temps en temps ou cycliquement au moyen d'une comparaison de la température (T_{meas,est,1...} T_{meas,est,n}) estimée respective à la température (T_{meas,1...}T_{meas,n}) mesurée respective du constituant (6) différent respectivement de la boîte (1...n) d'essieu concerné, et
- on forme une température (T_{amb,res}) ambiante résultante à partir des valeurs (T_{amb,1...} T_{amb,n}) de la température ambiante estimée à l'aide des modèles (T_{amb}estimator, _{1...} T_{amb}estimator,ₙ) de calcul associés à au moins certaines des boîtes (1...n) d'essieu, température ambiante résultante dont on tire parti respectivement comme grandeur d'entrée pour les modèles (T_{bearing}estimator,_{1...} T_{bearing}estimator,ₙ) de caclul qui sont prévus pour l'estimation de la valeur (T_{B,est,1} T_{B,est,n}) de la température respective de la boîte (1..n) d'essieu respective.

3. Procédé suivant la revendication 2, **caractérisé en ce qu'**à partir des valeurs (T_{amb,1...} T_{amb,n}) de la température ambiante estimées à l'aide des modèles (T_{amb}estimator, _{1...} T_{amb}estimator,ₙ) de calcul associés à au moins certaines des boîtes (1...n) d'essieu, on calcule la température (T_{meas,rest}) ambiante résultante par formation de la moyenne ou de la médiane des n températures (T_{amb}) ambiantes estimées les plus basses.

4. Procédé suivant l'une des revendications précédentes, **caractérisé en ce que** le modèle (T_{Bearing}estimator) de calcul pour l'évaluation de la température de la boîte (1) de l'essieu et/ou le modèle (T_{amb}estimator, _{1...} T_{amb}estimator,ₙ) de calcul pour l'estimation de la température (T_{amb}) ambiante du véhicule ferroviaire repose sur une modélisation d'au moins certains des éléments suivants : capacité calorifique de constituants (1, 2, 4, 6) de l'essieu ou de la boîte de l'essieu, conduction de la chaleur dans des constituants (1, 2, 4, 6) de l'essieu ou de la boîte de l'essieu, résistance à la propagation de la chaleur entre des constituants (1, 2, 4, 6) de l'essieu ou de la boîte de l'essieu, ainsi que propagation de la chaleur forcée et par convection forcée et libre entre des constituants (1, 2, 4, 6) de l'essieu ou de la boîte de l'essieu et l'atmosphère ambiante.

5. Procédé suivant l'une des revendications précédentes, **caractérisé en ce qu'**on effectue dans le modèle (T_{Bearing}estimator) de calcul pour l'estimation de la température de la boîte (1) de l'essieu et/ou dans le modèle (T_{amb}estimator) de calcul pour l'estimation de la température (T_{amb}) ambiante du véhicule ferroviaire respectivement un étalonnage de base ou un paramétrage de base, à partir duquel on adapte, alors que le véhicule ferroviaire fonctionne, les élément (Kₐ, K_{b}) de correction pour l'amélioration de la précision des modèles (T_{Bearing}estimator, T_{amb}estimator) de calcul.

6. Procédé suivant l'une des revendications précédentes, **caractérisé en ce que**, pour une température (T_{B,est}) estimée dépassant une valeur limite de température de la boîte (1) de l'essieu, on fournit un signal pour un état serré d'au moins un frein de friction associé à la boîte (1) d'essieu ou voisin de celle-ci et, pour une température (T_{B,est}) estimée inférieure à la valeur limite de température de la boîte (1) de l'essieu, un signal pour un état desserré du frein de friction associé à la boîte (1) de l'essieu ou voisin de celle-ci.

7. Procédé suivant l'une des revendications 1 à 5, **caractérisé en ce que**, pour une température (T_{B,est}) estimée dépassant une valeur limite de température de la boîte (1) de l'essieu, on fournit un signal d'une boîte (1) d'essieu en surchauffe et, pour une température (T_{B,est}) estimée inférieure à une valeur limite de température de la boîte (1) de l'essieu, un signal pour un fonctionnement non perturbé thermiquement de la boîte (1) de l'essieu.

8. Dispositif d'estimation de la température (T_{B,est}) d'une boîte (1) d'un essieu d'un véhicule ferroviaire au moyen d'un modèle (T_{Bearing}estimator) de calcul, dans lequel il est prévu
- un capteur (10) de température pour la mesure de la température d'un constituant (6) de l'essieu différent de la boîte (1) de l'essieu mais en liaison de conduction de la chaleur d'une manière directe ou indirecte avec la boîte (1) de l'essieu, ainsi que
- un microordinateur dans lequel le modèle (T_{Bearing}estimator) de calcul est mis en oeuvre pour estimer la température (T_{B,est}) de la boîte (1) de l'essieu concernée en fonction de la vitesse (V_{Train}) et de la tempétaure (T_{amb}) ambiante du véhicule ferroviaire comme grandeurs d'entrée du modèle (T_{Bearing}estimator) de calcul, et en outre
- la température du constituant (6) de l'essieu différent de la boîte (1) de l'essieu, mais en liaison de conduction de la chaleur d'une manière directe ou indirecte avec la boîte (1) de l'essieu est mesurée comme température (Tₘₑₐₛ) mesurée en fonctionnement par le capteur (10) de température,
- la température du constituant (6) différent de la boîte (1) de l'essieu, est estimée comme température (T_{meas,est}) estimée à l'aide du modèle (T_{Bearing}estimator) de calcul,
- pour améliorer la précision du modèle (T_{Bearing} estimator) de calcul en ce qui concerne l'estimation de la température (T_{B}, est) de la boîte (1) de l'essieu, le modèle (T_{Bearing} estimator) de calcul a un élément (K_{b}) de correction par lequel il étalonne ou égalise constamment de temps en temps ou cycliquement au moyen d'une comparaison de la température (Tₘₑₐₛ) mesurée à la température (Tₘₑₐₛ) estimée.

9. Dispositif suivant la revendication 8, **caractérisé en ce que** le capteur (10) de température est réuni, en un capteur de combinaison, avec un capteur de vitesse d'un appareil antienrayeur du véhicule ferroviaire.

10. Dispositif suivant la revendication 8 ou 9, **caractérisé en ce que** le constituant (6) de l'essieu différent de la boîte (1) de l'essieu est un couvercle (6) de boîte d'essieu recouvrant au moins en partie la boîte (1) de l'essieu.
